# EUROPEAN PATENT APPLICATION

(11) **EP 4 340 081 A1**
(43) Date of publication of application: **20.03.2024**
(21) Application number: 22196345.7
(22) Date of filing: 19.09.2022
(51) Int. Cl.: H01M 8/1226, H01M 8/00, H01M 8/12

(54) **NETWORKING ELECTROLYTE SUPPORTED FUEL CELL STRUCTURE**

(71) Applicant: Airbus Operations GmbH, 21129 Hamburg (DE); Airbus (S.A.S.), 31700 Blagnac (FR)
(72) Inventor: NEHTER, Pedro, 21129 Hamburg (DE); FRIEDL, Stephan, 31700 Blagnac (FR); GEISLER, Helge, 21129 Hamburg (DE); AHILAN, Vignesh, 21129 Hamburg (DE)
(74) Representative: LKGLOBAL Lorenz & Kopf Patentanwalt Attorney at Law PartG mbB

(57) **Abstract**

An electrolyte-supported fuel cell structure (100) is provided. The fuel cell structure (100) comprises an anode layer (110) having a first anode (111) and a second anode (112) electrically isolated from each other, a cathode layer (120) having a first cathode (121) and a second cathode (122) electrically isolated from each other, and a common electrolyte layer (130), arranged between the anode layer (110) and the cathode layer (120). The anode layer (110), the cathode layer (120) and the electrolyte layer (130) each extend in a first direction (101) and a second direction (102). The electrolyte layer (130) comprises a row (131) of through holes (132) aligned in the first direction (101) of the fuel cell (100) and is a continuous layer, so as to provide mechanical support for the fuel cell structure (100). The first anode (111) and the first cathode (121) define a first fuel cell segment (140). The second anode (112) and the second cathode (122) define a second fuel cell segment (150). The first cathode (121) is electrically interconnected with the second anode (112) through at least some of the through holes (132), so as to establish a serial connection between the first fuel cell segment (140) and the second fuel cell segment (150). Flat, square tubular, cylindrical tubular, and monolithic structures for the fuel cell structure (100) are disclosed.

## Description

### TECHNICAL FIELD

The present disclosure relates to fuel cell structures in general, and in particular to an electrolyte-supported fuel cell structure comprising multiple fuel cells that is supported by a common electrolyte layer and that implements a networking concept between the multiple fuel cell segments.

### TECHNICAL BACKGROUND

Because of the technical progress, and because of their environmentally friendly creation of electrical energy, fuel cells are becoming increasingly popular as alternative energy sources. However, planar solid oxide fuel cells (SOFCs), for example, offer a relatively low gravimetric power density and are as such currently mainly developed for stationary applications. In mobile applications, and for aircrafts in particular, reduction of weight is of paramount importance. Therefore, in order to keep the weight low while still providing the necessary power, increasing the gravimetric power density (being the power per weight unit) is desired.

In typical planar SOFCs having an oxide conducting ceramic electrolyte covered with a negative electrode (anode) on the fuel side and with a positive electrode (cathode) on the oxidizer side, metallic interconnectors at the outsides of each cell are used to electrically connect each cell to a neighboring cell and to separate the fuel from the oxidizer channel (air gas channel) of two neighboring cells, in order to build a fuel cell stack. The electrical current thereby is transferred in a perpendicular direction of the cell area. The interconnectors can take up to 70% of the total weight of such a planar stack.

Although known tubular cell designs, for example, do not rely on such heavy interconnectors and therefore offer optimization potential with regard to the gravimetric power density, such solutions implement current collection in the longitudinal or circular direction and along the in-plane cross section of the cell. This current collection mechanism causes higher current losses compared to planar concepts (partly because of the long distances the electrons have to travel) and with this low gravimetric power densities.

Also, integrated planar SOFC concepts are known in the art, in which single cell strips are arranged in a common plane onto a porous support substrate and interconnected in series by electrical interconnectors. Such solutions offer advantages with regard to the gravimetric power density because heavy interconnector plates can be avoided. However, the manufacturing process of the integrated planar SOFC e.g., concept requires that the porous support layer is produced prior to the functional layers, which results in difficulties with respect to applying the appropriate sintering temperatures, which furthermore can reduce the performance and durability of the cell. Further, the thermal expansion of the different layers result in an increased risk of delamination and cracking at the interface between two cell segments.

### DESCRIPTION

It is an objective to provide an integrated fuel cell structure having a high gravimetric power density and high mechanical strength while reducing manufacturing challenges.

This objective is solved by the subject matter of the independent claims. Further embodiments are described in the dependent claims as well as in the following description.

In particular, the above objective is solved by applying multiple electrodes in a networking configuration to a single electrolyte layer which also provides the mechanical support for the cell. The manufacturing process and sintering temperatures, respectively, can be chosen much more suitable to the manufacturing steps from the highest to the lowest sintering temperature level of the different layers. This is one of the major benefits compared to the state of the art SOFC networking concepts. Thus, highest gravimetric power densities can be achieved, while the manufacturing challenges are reduced significantly.

According to a first aspect, an electrolyte-supported fuel cell structure is provided. The fuel cell structure comprises an anode layer, having a first anode and a second anode electrically isolated from each other, a cathode layer, having a first cathode and a second cathode electrically isolated from each other, and a common electrolyte layer, arranged between the anode layer and the cathode layer. The anode layer, the cathode layer and the electrolyte layer each extend in a first direction and a second direction. The electrolyte layer comprises a row of through holes aligned in the first direction of the fuel cell and is a continuous layer, so as to provide mechanical support for the fuel cell structure. The first anode and the first cathode define a first fuel cell segment. The second anode and the second cathode define a second fuel cell segment. The first cathode is electrically interconnected with the second anode through at least some of the through holes, or through each of the through holes, so as to establish a serial connection between the first fuel cell segment and the second fuel cell segment.

This arrangement provides a fuel cell structure that consists of several fuel cell segments that are interconnected in a serial configuration and that utilize a common electrolyte layer. In particular, the single fuel cell segments are not stacked on top of each other, like multiple cells of a planar fuel cell stack, e.g.. They are rather arranged side-by-side with each other in a common plane. Therefore, the heavy-weight bipolar plates between the single fuel cells in a regular fuel cell stack can be omitted, thereby reducing weight of the structure. The electrolyte layer thereby is a coherent layer, so that every point on the electrolyte layer is in some way connected to every other point on the electrolyte layer. In other words, there is no position on the electrolyte layer that completely separates a first section of the electrolyte layer from a second section of the electrolyte layer.

However, the first anode and the second anode are arranged in a common plane side-by-side but are not in electrical contact with each other. The first anode and the second anode are therefore, although they are located in a common plane, separate anodes. In the same way the first cathode and the second cathode are separate cathodes that are not in electrical contact with each other but are located in a common plane parallel to the anode layer (or concentric to the anode layer in tubular embodiments, as described further below).

The electrolyte layer is arranged between the anode layer and the cathode layer The first direction and the second direction, into which the anode layer, the cathode layer, and the electrolyte layer each extend, may, for example, be a length and a width direction in a planar embodiment, or the circumferential direction and the longitudinal (or axial) direction in tubular embodiments. However, other configurations are conceivable, too. The row of through holes then may be arranged in any suitable way so as to achieve a serial connection between single fuel cell segments in the networking fuel cell structure. The row of through holes comprises a number of through holes that are aligned in the first direction, so that one through hole follows after another through hole in the first direction. The through holes thereby may be arranged in regular or irregular distances with each other and provide passages for electrical interconnections between the corresponding cathodes and anodes that are arranged on opposite surfaces of the electrolyte layer.

The first cathode is electrically connected with the second anode through each of the through holes in the electrolyte layer. For example, the first cathode may extend over the through holes in the second direction, which may be perpendicular to the first direction in the in-plane direction. In the same way, the second anode may extend over the through holes in the first direction but from the opposite side of the row of through holes. In other words, the anode of the second fuel cell segment is overlapping the cathode of the first fuel cell segment in the region of the through holes. The row of through holes spatially separates the first fuel cell segment (comprising the first anode and cathode) from the second fuel cell segment (comprising the second anode and cathode). Any suitable electrical connector may then be arranged within the through holes which then connects the first cathode with the second anode. It should be noted that the through holes need to be gas-tight in order to avoid leakages from the fuel side to the air side and vice versa. This is particularly important to avoid leakages from the cathodes to the anodes, as such leakages may lead to reoxidation of an anode catalyst. However, a small amount of gas leakage from the anodes to the cathode may be acceptable if the temperature is kept moderate in the area of the leakage. For example, the through holes may be filled with an electrically conductive and gas-tight material, enabling current flow between the first cathode and the second anode. This connection scheme corresponds to a serial connection of the first fuel cell segment with the second fuel cell segment, wherein the fuel cell segments are arranged side-by-side having a common electrolyte layer. Although the electrolyte layer being a common and continuous electrolyte layer for the first and second fuel cell segments, the section of the electrolyte layer between the first cathode and the first anode is functionally associated with the first fuel cell segment while the section between the second cathode and the second anode is functionally associated with the second fuel cell segment.

The electrolyte layer provides mechanical support for the fuel cell structure, so that no additional support layer is necessary. Inter alia, this is achieved because the electrolyte layer is a coherent and continuous layer that does not have areas completely separated from each other. In particular, the through holes, serving as passages for electrical interconnections between corresponding anodes and cathodes, are arranged such that the section of the common electrolyte layer functionally belonging to the first fuel cell segment is connected with the section of the electrolyte layer functionally belonging to the second fuel cell segment by webs or bridges between each of the through holes, so that the electrolyte layer builds a common and non-interrupted layer (except for the through holes). Therefore, the electrolyte layer also builds a mechanical support layer for the fuel cell structure. Further, mechanical support is achieved by dimensioning the thickness of the electrolyte layer appropriately. The electrolyte layer therefore may be thicker than in state of the art solutions such as electrolyte supported fuel cell stacks. In particular, the electrolyte layer may have a thickness of at least 150 µm.

Although described as having two fuel cell segments, it should be appreciated that the fuel cell structure may have any number of fuel cell segments greater than two. If so, additional rows of through holes are present in the electrolyte layer between each two fuel cell segments. If, for example, a third fuel cell segment comprising a third anode and a third cathode is present, the second cathode may be electrically connected to the third anode through a number of through holes of a second row of through holes in the same way as the first cathode is connected with the second anode through the through holes of the first row, thereby establishing a serial connection between the second and third fuel cell segments. If further a fourth fuel cell segment comprising a fourth anode and a fourth cathode is present, the third cathode may be electrically connected to the fourth anode in the same way through a number of through holes of a third row, and so on. The first anode and the last cathode may then build negative and positive terminals, respectively, so that a serial connection of all the fuel cell segments in the fuel cell structure is established by contacting these terminals.

From a structural and electrical view, the serial connection of multiple fuel cell segments is achieved by interconnecting adjacent fuel cell segments that are arranged in the same plane in which each fuel cell segment extends instead of stacking the fuel cell segments one above the other.

The electrolyte layer described above provides mechanical support for the fuel cell structure in the same way as the electrolyte layer in regular electrolyte-supported cells. However, the interconnection concept between single fuel cell segments in the fuel cell structure provides an integrated networking concept for such electrolyte supported cells, so that a large number of fuel cell segments may be integrated into a single structure in a way that provides short current collection paths and low weight. Further, regular electrolyte supported fuel cells feature smaller electrode thicknesses and therefore higher ohmic in-plane losses compared to the anode in anode supported or the cathode in cathode supported cells. These losses are reduced by the short current collection paths of the disclosed fuel cell networking concept and by the way of the electrical interconnections between consecutive ones of the first to n-th fuel cells. Because electrolyte-supported fuel cells in general promise higher mechanical stability than porous support structures in electrode-supported cells or than a porous support substrate, such as described in the technical background, the disclosed fuel cell structure provides high mechanical stability (resulting in less weight because additional support structures are not necessary) and low losses and therefore increases the gravimetric power density.

According to an embodiment, the first cathode and the second anode comprise a series of tabs, at least some of the tabs, or each of the tabs, extending over one of the through holes. One or more of the tabs, or each of the tabs, of the first cathode are electrically connected with a corresponding one of the tabs of the second anode through a corresponding one of the through holes, thereby establishing the serial connection between the first fuel cell segment and the second fuel cell segment.

This configuration provides a "toothed/serrated structure" of the anodes and cathodes at the regions of the anodes and cathodes facing the row of through holes, wherein the tabs correspond to the "teeth" extending over the through holes. Therefore, the regions between the through holes (webs/bridges) are kept free from the anode layer and the cathode layer.

Depending on the size and area ratio between the through holes and the webs/bridges, shortcut currents may occur in the first direction. The toothed configuration may help to avoid such internal shortcut currents between the through holes and the webs/bridges arranged between the through holes.

It should be appreciated that it is also possible that only one of the first cathode and the second anode comprises such a tab structure, so that the other one of the first cathode and the second anode also extends over the webs/bridges.

According to another embodiment, the second cathode is separated from the row of through holes by an insulation gap, thereby electrically isolating the first cathode from the second cathode.

Such an insulation gap may physically and therefore electrically isolate the first cathode from the second cathode in order to prevent short circuits. The insulation gap may run along the first direction and adjacent to the row of through holes.

It is also conceivable that, instead of a gap, another isolating material is arranged between the row of through holes and the second cathode (and therefore between the first cathode and the second cathode). Such an isolating material may, for example, be a strip of such a material running between the row of through holes and the second cathode in the first direction.

Additionally or alternatively, the first anode may be separated from the row of through holes by an insulation gap in the same way, thereby electrically isolating the first anode from the second anode.

According to another embodiment, the electrolyte-supported fuel cell structure is a planar fuel cell structure having a flat shape.

In such a flat configuration, one side of the plane defined by the fuel cell structure corresponds to the fuel side while the other side corresponds to the oxidizer/air side. The first fuel cell segment and the second fuel cell segment (and possibly further fuel cell segments) are arranged in the plane and side-by-side. In particular, in such a configuration, the first direction corresponds to one of the width and the length direction of the planar fuel cell structure while the second direction corresponds to the other one of width and the length direction.

According to another embodiment, the electrolyte-supported fuel cell structure further comprises a tubular shape defining a tube having an inner side and an outer side.

Such a tubular shape corresponds to a rolled-up version of a flat configuration. In the tubular shape, in contrast to a flat shape, the anode layer, the cathode layer and the common electrolyte layer are arranged concentrically around a common central axis instead of parallel to one another. The tubular shape thereby may be any conceivable elongated tube, such as a square tube, a rectangular tube, or a cylindrical tube. The tubular fuel cell structure comprising the anode layer, the cathode layer and the common electrolyte layer has a curved shape, such that the fuel cell structure is closed in itself along a circumferential direction. The inner side of the tube is fully encapsulated by the fuel cell structure in circumferential direction. Such a tubular shape further improves the mechanical stability of the fuel cell structure.

According to another embodiment, the tube is a square tube, and the inner side of the tube is divided by a partition wall. The partition wall provides additional mechanical support.

The partition wall additionally supports or reinforces the tubular fuel cell structure from the inner side of the tube. The fuel cell structure itself, and in particular the anode layer, the cathode layer and the electrolyte layer are designed in the same way as described above with regard to the tubular design. Further, the tube may also include any number of partition walls greater than one, such as two, three, four, etc., partition walls.

According to another embodiment, the partition wall comprises an electrochemically inactive material.

The partition wall therefore does not participate in the electrochemical processes within the fuel cell structure but does only provide additional mechanical reinforcement. The partition wall may be made from any electrochemically inactive material that provides sufficient mechanical reinforcement.

According to another embodiment, the partition wall comprises the same material as the electrolyte layer.

In particular, the electrolyte layer and the partition wall may be a uniform element made from the same material, such as, for example, Yttria-stabilized zirconia or Scandium-stabilized Zirconia. Such a configuration allows the electrolyte layer and the partition wall to be built together or integral. The anode layer and the cathode layer may then be coated to the surrounding walls of the tube (that are electrochemically active) in the same way as described above.

According to another embodiment, the first direction is the circumferential direction of the tube, such that the row of through holes runs along the circumferential direction of the tube. The second direction is the longitudinal direction of the tube.

The first fuel cell segment and the second fuel cell segment in this configuration correspond to longitudinal sections of the fuel cell structure, meaning that a first part of the tube in the longitudinal direction corresponds to the first fuel cell segment and a second part of the tube adjacent to the first part of the tube in the longitudinal direction corresponds to the second fuel cell segment. The single fuel cell segments of the fuel cell structure are therefore distinguished by their longitudinal position on the tube. The row of through holes (and possibly further rows of through holes in configurations with more than two fuel cell segments) runs around the circumference of the tube.

According to another embodiment, one of the inner side of the tube and the outer side of the tube builds a common fuel channel for supplying the fuel cell structure with fuel. The other one of the inner side of the tube and the outer side of the tube builds a gas channel for supplying the fuel cell structure with an oxidizer.

For example, the inner side of the tube may be supplied with a continuous flow of fuel (such as hydrogen), such that the fuel enters the inner side of the tube at one longitudinal end of the tube and the excess fuel exits the inner side of the tube at the opposite longitudinal end of the tube. In this case, the anode layer is located at the inner side of the tube and builds the inner wall of the tube, and the cathode layer is located at the outer side of the tube and builds the outer wall of the tube. The fuel then flows by each of the fuel cell segments of the fuel cell structure and supplies each of the fuel cell segments with fuel. The outer side of the tube may be supplied with a continuous flow of an oxidizing agent (such as oxygen or air) that flows by the tube. The fuel oxidation reaction then takes place from the inner side, just as in regular fuel cells, and the current collection takes place through the through holes (or rather the electrical connections inside the through holes).

If the inner side of the tube is the gas channel and the outer side of the tube is the fuel channel, the cathode layer builds the inner wall of the tube and the anode layer builds the outer wall of the tube. The reaction then takes place from the outside to the inside.

According to another embodiment, the electrolyte layer in the first direction is larger than the anode layer and larger than the cathode layer and fully encloses the anode layer or the cathode layer.

The electrolyte layer thereby may be used as fuel channel/tube or oxidizer channel/tube respectively.

According to another embodiment, the electrolyte layer splits up in two directions at terminal ends of the anode layer and of the cathode layer in the first direction, and encloses the anode layer and the cathode layer, such that a tubular fuel channel and a tubular oxidizer channel is defined by the electrolyte layer, thereby building a monolithic fuel cell structure.

In such an embodiment, the inner walls of the fuel tube (inner walls of the electrolyte layer within the fuel tube) may be coated with the anode layer and the inner walls of the oxidizer tube (inner walls of the electrolyte layer within the oxidizer tube) may be coated with the cathode layer. Each of the inner walls of the electrolyte layer may comprise the through holes as described above. By adding multiple such structures together, so that a fuel tube follows an oxidizer tube (and vice versa) in every spatial direction, every inner wall between two such tubes acts as a fuel cell. Such a monolithic structure allows for a large amount of fuel cell segments on a relatively small volume and therefore offers a high gravimetric density. It should be appreciated that the inner walls (built by the electrolyte layer) between each two such tubes may be manufactured as a uniform part, so that the monolithic fuel cell structure has a honeycomb like cross section where the inner walls are coated with the anode layer and the cathode layer, respectively. Every connecting wall thereby implements the networking concept described above.

According to another embodiment, the fuel cell structure is a structure of ceramic solid oxide fuel cells, SOFCs and the electrolyte layer comprises an oxide conducting ceramic electrolyte.

Advantages of this class of fuel cells include high combined heat and power efficiency (power output in the MW range), long-term stability, fuel flexibility, low emissions, and relatively low cost. SOFCs are therefore in particular useful for auxiliary power units or for propulsion purposes in aircraft application.

According to another embodiment, along the row of through holes and between each two consecutive through holes, the electrolyte layer is non-conductive for oxide.

By deactivating the oxide conductivity of the electrolyte layer in the areas of the webs/bridges, the possibility for short circuits and creep currents at the boundary between the webs/bridges and the through holes comprising the electrical connections can be prevented. Deactivation of the oxide conductivity may, for example, be achieved by doping the electrolyte layer with a material that blocks oxide vacancies within the electrolyte material in the areas of the webs/bridges or by using a non-conductive (inactive) material, such as Al₂O₃, in these areas. However, these are only examples. Deactivation of the oxide conductivity may also be achieved by any other suitable method.

According to another embodiment, along the row of through holes and between each two consecutive through holes, the electrolyte layer is masked with a gas tight material.

Such masking also helps to prevent short circuits and creep currents at the boundary between the webs/bridges and the through holes comprising the electrical connections.

In summary, the present disclosure provides a fuel cell structure that is mechanically supported by the electrolyte layer itself and therefore does not rely on additional support structures. Further, the arrangement of the single fuel cell segments in a common plane side-by-side avoids the need for heavy bipolar plates, such as in regular fuel cell stacks. The integrated networking concept therefore allows for a lightweight fuel cell structure with short current collection paths and high gravimetric power densities. Further, the output of the fuel cell structure is easily scalable by increasing the number of single fuel cell segments in the fuel cell structure. From a manufacturing point of view, the disclosed fuel cell structure allows for advantageous sintering processes. Regularly, the layers are applied one by one with different sintering steps in between. Ideally, manufacturing of networking SOFC concepts should start with the material with the highest sintering temperature. The layers with lower required sintering temperatures should be added later, in order to avoid for the first layer to experience higher temperatures than its sintering temperature (because this would affect these materials). However, usually the electrodes require the highest sintering temperatures, so that the electrolyte layer would necessarily be affected by the sintering step of the last electrode if everything would be sintered together. The present fuel cell structure allows to sinter the electrolyte (support) layer first and add the components together later. Therefore, the above drawbacks in manufacturing are avoided.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic exploded view of the layout of a flat fuel cell structure.
- **Fig. 2**: a schematic cut view along cut line A-A in Figs. 3 and 3.
- **Fig. 3**: a schematic cut view along cut line B-B in Figs. 2 and 3.
- **Fig. 4**: a schematic view of a common electrolyte layer of a cylindrical tubular fuel cell structure comprising four fuel cells.
- **Fig. 5**: a schematic view of a cylindrical tubular fuel cell structure comprising the common electrolyte layer of Fig. 1 with added anode and cathode layers.
- **Fig. 6**: a schematic view of a flat tubular fuel cell structure.
- **Fig. 7**: a schematic view of the layup of an air and fuel channel of a monolithic fuel cell structure.
- **Fig. 8**: an arrangement of two air and two fuel channels of the monolithic structure of Fig. 7.

### DETAILLED DESCRIPTION

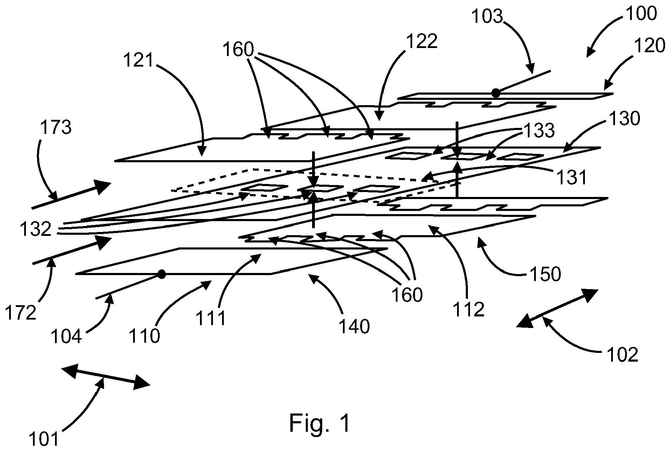

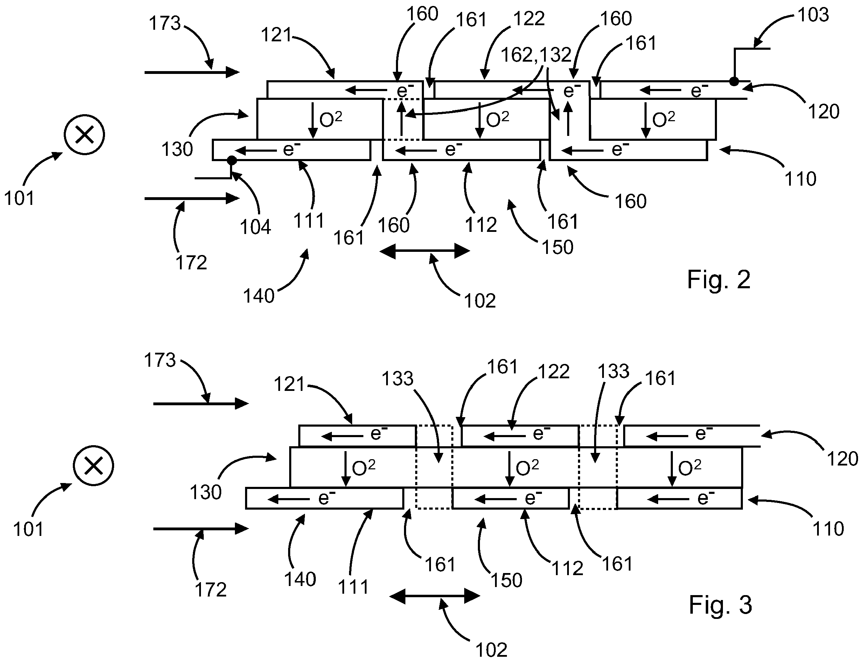

Fig. 1 shows an exploded view of the layup of a flat electrolyte supported fuel cell structure 100. This layup also corresponds to the unrolled layup of the tubular fuel cell structure 100 of Fig. 3, described further below. The fuel cell structure 100 comprises a cathode layer 120, an anode layer 110 and a common electrolyte layer 130 in between the anode layer 110 and the cathode layer 120. The fuel cell structure 100 extends in a first direction 101, corresponding to the width direction, and a second direction 102, corresponding to the length direction.

The common electrolyte layer 130 is a generally continuous and coherent layer, so that every point on the layer is in some way connected to every other point on the layer. The electrolyte layer 130 comprises two rows 131 of through holes 132. The through holes 132 are arranged in the first direction 101 in substantially equal distances. Each two consecutive through holes 132 within one of the rows 131 are separated by a web/bridge 133 in the first direction 101.

The anode layer 110 and the cathode layer 120 in the depicted configuration each consist of three anodes and three cathodes, respectively. The relation between two of such anodes 111, 112 and two of such cathodes 121, 122 will described in the following. The relation between additional anodes and cathodes to the previous anodes and cathodes is the same and will not be described separately. The first cathode 121, the first anode 111, and the region of the electrolyte layer 130 between the first cathode 121 and the first anode 111 together build a first fuel cell segment 140. The second cathode 122, the second anode 112, and the region of the electrolyte layer 130 between the second cathode 122 and the second anode 112 together build a second fuel cell segment 150. The first cathode 121 comprises a number of tabs 160 that protrude towards the first row 131 of through holes 132 from the left side of the row 131, such that the right edge of the first cathode 121 builds a toothed structure. The second anode 112 in the same way comprises a number of tabs 160 that protrude towards the first row 131 of through holes 132 from the right side of the row 131. Each of the tabs 160 of the second anode 112 and the first cathode 121 overlaps with a corresponding one of the through holes 121. In the assembled state, the tabs of the first cathode 121 and of the second anode 112 are electrically interconnected through these corresponding through holes 132. The electrical interconnections are not shown in Fig. 1.

This configuration provides an integrated networking concept providing a serial connection between the first fuel cell segment 140, the second fuel cell segment 150, and the third fuel cell segment, wherein the first and second fuel cell segments 140, 150 and the third fuel cell segment are arranged side-by-side with each other in a common plane. A positive terminal 103 at the last cathode (third cathode in the depicted configuration) of the fuel cell arrangement 100 and a negative terminal 104 at the first anode 111 of the fuel cell arrangement 100 can be contacted in order to use the fuel cell structure 100.

An air flow 172 flows around the cathode layer 120 and a fuel flow 172 flows around the anode layer 110. Therefore, the chemical reaction takes place from the bottom of Fig. 1 to the top of Fig. 1. The configuration of the common electrolyte layer 130 as a continuous layer allows for the fuel cell structure 100 to be mechanically supported by the electrolyte 130. Additional support structures are not necessary.

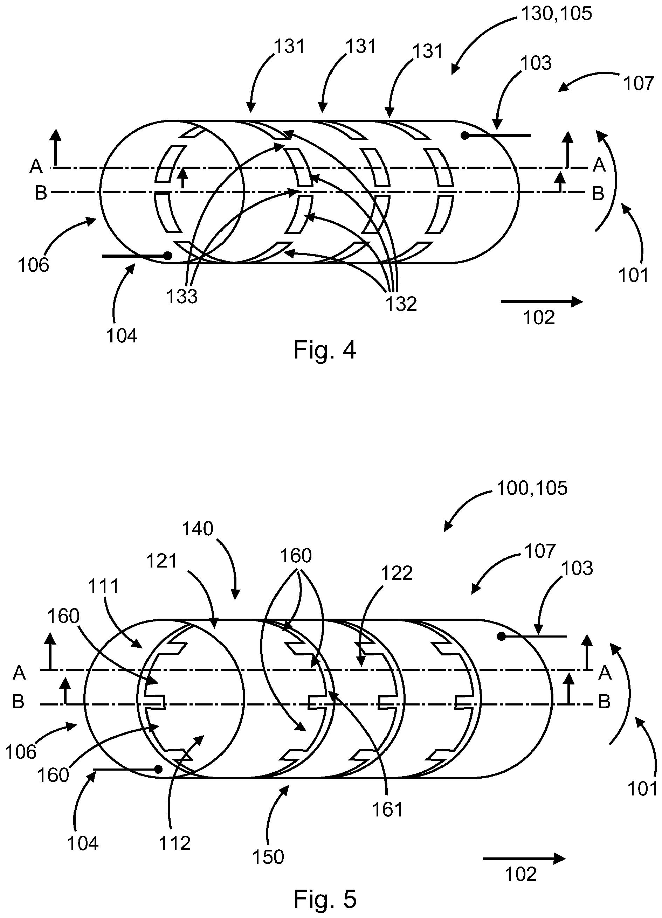

Fig. 2 shows a cut view through the fuel cell structure 100 of Figs. 1, 4 and 5 along the second direction 102 at a position having a through hole 132. In Fig. 1, the cut line is not shown for clarity of presentation. However, Figs. 4 and 5 show the cut line A-A. Figs. 4 and 5 correspond to a cylindrical tubular rolled-up version of the fuel cell structure 100 of Fig. 1. Therefore, the sectional views are the same. In Fig. 2, it is shown that electrical interconnections 162 are present within each of the through holes 132. Further, the overlapping tabs 160, connected by the electrical interconnections 162, are clearly visible. The electrical interconnections 162 electrically connect the first cathode 121 with the second anode 112 and the second cathode 122 with the third anode, thereby establishing a serial connection between the first fuel cell segment 140, the second fuel cell segment 150 and the third fuel cell segment (no reference sign). To avoid short circuits, between each cathode and between each anode an insulation gap 161 is present. The insulation gaps 161 may optionally be filled with an electrically insulating material.

Fig. 3 shows a cut view through the fuel cell structure 100 of Figs. 1, 4 and 5 along the second direction at a position where no through holes 132 are present (cut line B-B in Figs. 4 and 5). In Fig. 3, it is clearly visible that no electrical interconnections 162 are present at these positions. Further, at these positions, the common electrolyte layer 130 is not interrupted along the second direction 102. Instead, between each of the fuel cell segments, a bridge or web 133 is present. These webs/bridges 133 are part of the electrolyte layer 130 itself. Therefore, each section of the electrolyte layer 130 is connected with adjacent sections by the webs/bridges 133, providing mechanical stability over the entire fuel cell structure 100.

Figs. 4 and 5 show a cylindrical tubular configuration 105 of the electrolyte supported fuel cell structure 100. Fig. 4 only shows the electrolyte layer 130 in the tubular configuration 105 and Fig. 5 shows the fuel cell structure with added anode and cathode layer 110, 120. In this configuration, the first direction 101 corresponds to the circumferential direction 101 of the tube 105. The second direction 102 corresponds to the longitudinal direction 102 of the tube 105. The shown configuration corresponds to a rolled-up version of the flat configuration of the fuel cell structure 100 of Fig. 1 which is rolled-up/curved in the first direction 101. Therefore, the anode layer 110, the cathode layer 120 and the electrolyte layer 130 are arranged concentrically around a common symmetry axis in the center of the tube 105 and build a closed surface. The remaining features of the tubular fuel cell structure 100 are the same as described with regard to Figs. 1 to 3. In the shown configuration, the anode layer 110 is arranged at an inner side 106 of the tube 105 and the cathode layer 120 is arranged at an outer side of the tube 105.

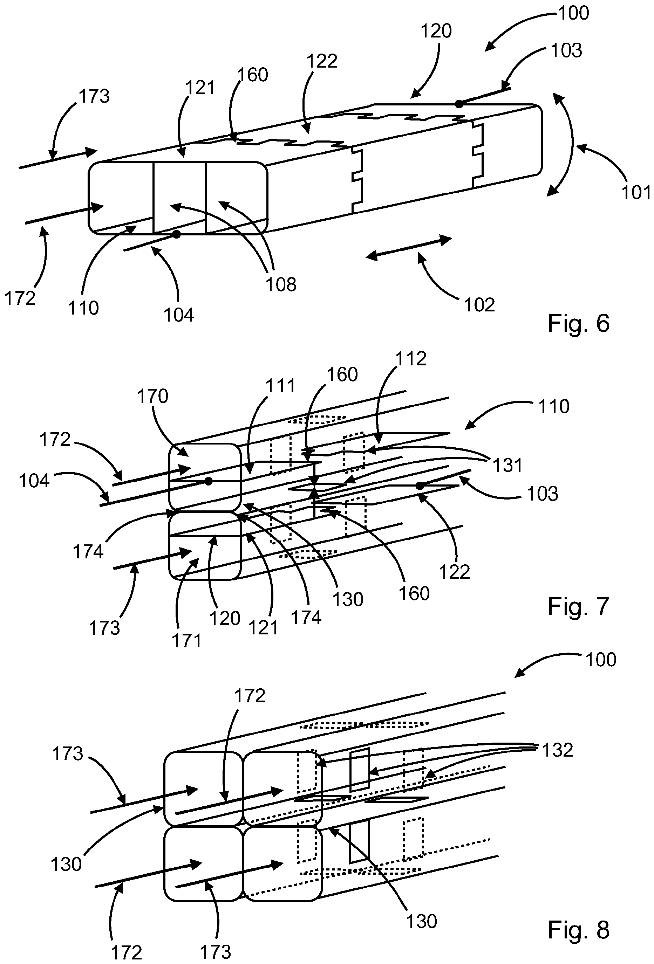

Fig. 6 shows another configuration of a tubular fuel cell structure 100. The fuel cell structure 100 of Fig. 6 differs from the fuel cell structure 100 of Figs. 4 and 5 in that it comprises two additional partition walls 108 in the inner side of the tube and in that it has a square like cross section. The square like cross section allows for better mechanical support. However, other shapes are conceivable, too. The partition walls 108 provide additional mechanical support but do not participate in the electrochemical interactions within the fuel cell structure 100. However, because the partition walls 108 divide the fuel channel into multiple smaller fuel channels, fluid dynamics of the fuel flow 172 may be improved. The partition walls 108 may be made from any electrochemically inactive material. Preferably, the partition walls 108 are made from the same material as the electrolyte layer 130 (see Fig. 4), so that the electrolyte layer 130 and the partition walls 108 can be constructed as a uniform part in a common process step. The electrolyte layer 120 and the anode layer 110 may then be added at the electrochemically active areas along the circumferential direction 101 and the longitudinal direction 102.

Figs. 7 and 8 show a monolithic design of a fuel cell structure 100, where inner sides of tubes are alternatingly used as fuel and oxidizer sides. Each of the connecting walls between two of the tubes function as fuel cell segments in the same way as described with regard to Figs. 1 to 5.

Fig. 7 shows two such tubes to illustrate the working principle, in particular the arrangement of the anodes and the cathodes. This configuration is modified from the configuration of Fig. 1 in that the common electrolyte layer 130 between the two tubes splits up in two at the contact surface of the two tubes. In particular, the two tubes build a common structure, where the wall between the two tubes one common wall. At the edges 174 of the contact surface, the electrolyte layer 130 splits up in two opposite direction (top and bottom direction in the figure). An anode layer 110 as described with regard to Figs. 1 to 5 is arranged at the contact surface of the upper tube and the lower tube within the upper tube, so that the upper part of the electrolyte layer 130 fully encloses the anode layer 110. A cathode layer 120 as described with regard to Figs. 1 to 5 is arranged at the contact surface within the lower tube, so that the lower part of the electrolyte layer 130 fully encloses the cathode layer 120. In other words, the contact surface builds a flat fuel cell structure 100 as described with regard to Fig. 1, where the first cathode 121 of the cathode layer 120 and the second anode 112 of the anode layer 110 are interconnected via through holes 132 to build a serial connection of fuel cells. The upper tube acts as a fuel channel 170 fur supplying the fuel cell structure 100 with a fuel flow 172 and the and the lower tube acts as a gas channel 171. The working principle is the same as in Fig. 1 to 5. It should be noted that, although only shown as being above and below the contact surface, the anode layer 110 and the cathode layer 120 run along the complete inner surface of the corresponding tubes in the circumferential direction, just as in the tubular configuration of Fig. 4 and 5. This is indicated by the through holes 132 shown at the side of each tube.

Fig. 8 shows the fuel cell structure 100 of Fig. 7 adjusted by two additionally tubes, one of which is a fuel tube and the other one is a gas/oxidizer tube. Each of the four tubes has a common contact surface with every adjacent tube in every direction each of which is a common electrolyte layer 130. In other words, every pair of tubes in both directions of the plane view when viewed from the insert opening of the tubes builds the same configuration as described with regard to Fig. 7, since the anode layer 110 and the cathode layer 120 of each tube runs along the circumferential direction each tube and is present at every contact surface. In particular, the row 130 of through holes 131 in each tube runs along the circumferential direction of the corresponding tube and builds electrical interconnections to the corresponding electrode 110, 120 of the neighboring tubes. In other words, the common electrolyte layer 130 builds a honeycomb like elongated structure and adjacent honeycombs are alternatingly coated with anode layers 110 and cathode layer 120, so as to implement the disclosed networking principle of fuel cells described herein. The fuel cell structure 100 of Figs. 7 and 8 may implement every feature of the networking principle/concept described with regard to the flat and tubular configurations, in particular every feature regarding the interconnection concept between different electrodes by means of the through holes 132.

The monolithic design described with regard to Figs. 7 and 8 provides very high mechanical strength, since the supporting electrolyte layer 130 is built in a continuous and honeycomb like structure. Further, the alternating arrangement of fuel and gas channels, each implementing the networking concept described herein with every neighboring channel/tube provides a very large number of fuel cell segments at a very low volume. Therefore, the configuration of Fig. 7 and 8 greatly increases the gravimetric power density of the fuel cell structure 100.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: Electrolyte-supported fuel cell structure
- 101: first direction, circumferential direction
- 102: second direction, longitudinal direction
- 103: positive terminal
- 104: negative terminal
- 105: tube
- 106: inner side of the tube
- 107: outer side of the tube
- 108: partition wall
- 110: anode layer
- 111: first anode
- 112: second anode
- 120: cathode layer
- 121: first cathode
- 122: second cathode
- 130: common electrolyte layer
- 131: row of through holes
- 132: through holes
- 133: webs/bridges
- 140: first fuel cell segment
- 150: second fuel cell segment
- 160: tabs
- 161: insulation gap
- 162: electrical interconnection
- 170: fuel channel
- 171: gas channel
- 172: fuel flow
- 173: air flow
- 174: edges of contact surface

## Claims

1. An electrolyte-supported fuel cell structure (100), comprising:
an anode layer (110) having a first anode (111) and a second anode (112) electrically isolated from each other;
a cathode layer (120) having a first cathode (121) and a second cathode (122) electrically isolated from each other; and
a common electrolyte layer (130), arranged between the anode layer (110) and the cathode layer (120);
wherein the anode layer (110), the cathode layer (120) and the electrolyte layer (130) each extend in a first direction (101) and a second direction (102);
wherein the electrolyte layer (130) comprises a row (131) of through holes (132) aligned in the first direction (101) of the fuel cell (100) and is a continuous layer, so as to provide mechanical support for the fuel cell structure (100);
wherein the first anode (111) and the first cathode (121) define a first fuel cell segment (140);
wherein the second anode (112) and the second cathode (122) define a second fuel cell segment (150);
wherein the first cathode (121) is electrically interconnected with the second anode (112) through at least some of the through holes (132), so as to establish a serial connection between the first fuel cell segment (140) and the second fuel cell segment (150).

2. The electrolyte-supported fuel cell structure (100) of claim 1, wherein the first cathode (121) and the second anode (112) comprise a series of tabs (160), at least some of the tabs (160) extending over one of the through holes (132);
wherein one or more of the tabs (160) of the first cathode (121) are electrically connected with a corresponding one of the tabs (160) of the second anode (112) through a corresponding one of the through holes (132), thereby establishing the serial connection between the first fuel cell segment (140) and the second fuel cell segment (150).

3. The electrolyte-supported fuel cell structure (100) of any one of the preceding claims, wherein the second cathode (122) is separated from the row (131) of through holes (132) by an insulation gap (161), thereby electrically isolating the first cathode (121) from the second cathode (112).

4. The electrolyte-supported fuel cell structure (100) of any one of the preceding claims, wherein the electrolyte-supported fuel cell structure (100) is a planar fuel cell structure (100) having a flat shape.

5. The electrolyte-supported fuel cell structure (100) of any one of claims 1 to 3, further comprising a tubular shape defining a tube (105) having an inner side (106) and an outer side (107).

6. The electrolyte-supported fuel cell structure (100) of claim 5, wherein the tube (105) is a square tube (105); and
wherein the inner side (106) of the tube is divided by a partition wall (108) that provides additional mechanical support.

7. The electrolyte-supported fuel cell structure (100) of claim 6, wherein the partition wall (108) comprises an electrochemically inactive material.

8. The electrolyte-supported fuel cell structure (100) of claim 6 or 7, wherein the partition wall (108) comprises the same material as the electrolyte layer (130)

9. The electrolyte-supported fuel cell structure (100) of any one of claims 5 to 8, wherein the first direction (101) is the circumferential direction of the tube (105), such that the row (131) of through holes (132) runs along the circumferential direction of the tube (105); and
wherein the second direction (102) is the longitudinal direction of the tube (105).

10. The electrolyte-supported fuel cell structure (100) of any one of claims 5 to 9, wherein one of the inner side (106) of the tube (105) and the outer side (107) of the tube (105) builds a common fuel channel (170) for supplying the fuel cell structure (100) with fuel; and
wherein the other one of the inner side (106) of the tube (105) and the outer side (107) of the tube (105) builds a gas channel (171) for supplying the fuel cell structure (100) with an oxidizer.

11. The electrolyte-supported fuel cell structure (100) of any one of claims 1 to 3, wherein the electrolyte layer (130) in the first direction 101 is larger than the anode layer (110) and larger than the cathode layer (120) and encloses the anode layer (110) or the cathode layer (12).

12. The electrolyte-supported fuel cell structure (100) of claim 11, wherein the electrolyte layer (130) splits up in two directions at terminal ends of the anode layer (110) and of the cathode layer (120) in the first direction (101) and encloses the anode layer (110) and the cathode layer (120), such that a tubular fuel channel and a tubular oxidizer channel is defined by the electrolyte layer (130), thereby building a monolithic fuel cell structure (100).

13. The electrolyte-supported fuel cell structure (100) of any one of the preceding claims, wherein the fuel cell structure (100) is a structure of ceramic solid oxide fuel cells, SOFCs; and
wherein the electrolyte layer (130) comprises an oxide conducting ceramic electrolyte.

14. The electrolyte-supported fuel cell structure (100) of claim 13, wherein along the row (131) of through holes (132) and between each two consecutive through holes (132), the electrolyte layer (130) is non-conductive for oxide.

15. The electrolyte-supported fuel cell structure (100) of any one of the preceding claims, wherein along the row (131) of through holes (132) and between each two consecutive through holes (132), the electrolyte layer (130) is masked with a gas tight material.
